# EUROPEAN PATENT APPLICATION

(11) **EP 2 884 706 A1**
(43) Date of publication of application: **17.06.2015**
(21) Application number: 14182303.9
(22) Date of filing: 26.08.2014
(51) Int. Cl.: H04L 12/763

(54) **Information processing device, information processing system, communication method, and computer-readable storage medium storing communication program**

(30) Priority: 13.09.2013 JP 2013190802
(71) Applicant: FUJITSU LIMITED, Kawasaki-shi, Kanagawa 211-8588 (JP)
(72) Inventor: Morosawa, Atsushi, Kanagawa, 211-8588 (JP); Matsui, Takao, Kanagawa, 211-8588 (JP)
(74) Representative: Hoffmann Eitle

(57) **Abstract**

A routing table (142) stores therein an upper unit for 60 G wireless (146a), a lower unit for 60 G wireless (146b), a left unit for 60 G wireless (146c), a right unit for 60 G wireless (146d), or a WLAN unit (147) as a routing destination based on a direction from its own node (10) to a destination node (10) and a distance therebetween. A routing unit (143) routes a packet to the upper unit for 60 G wireless (146a), the lower unit for 60 G wireless (146b), the left unit for 60 G wireless (146c), the right unit for 60 G wireless (146d), or the WLAN unit (147) based on the routing destination retrieved from the routing table (142) through table retrieval.

## Description

### FIELD

The embodiments discussed herein are related to an information processing device, an information processing system, a communication method, and a computer-readable storage medium storing a communication program.

### BACKGROUND

In recent years, highly integrated servers including a large number of nodes mounted in a rack thereof have been utilized as a server for cloud computing or a data center. Herein, a node means an information processing device including a central processing unit (CPU), a memory, a storage, a crossbar switch, and the like.

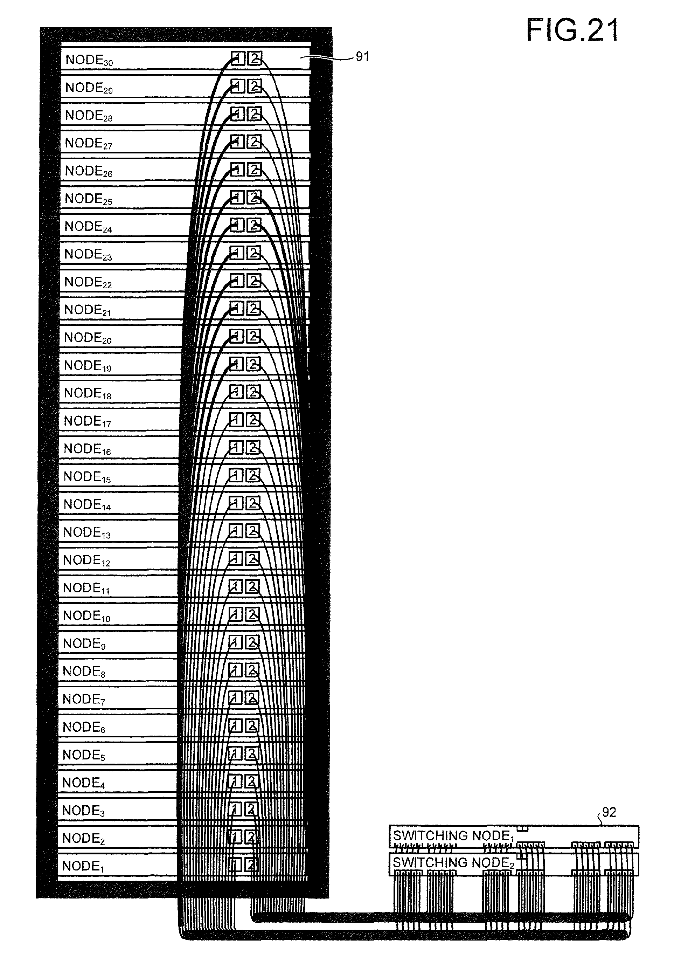

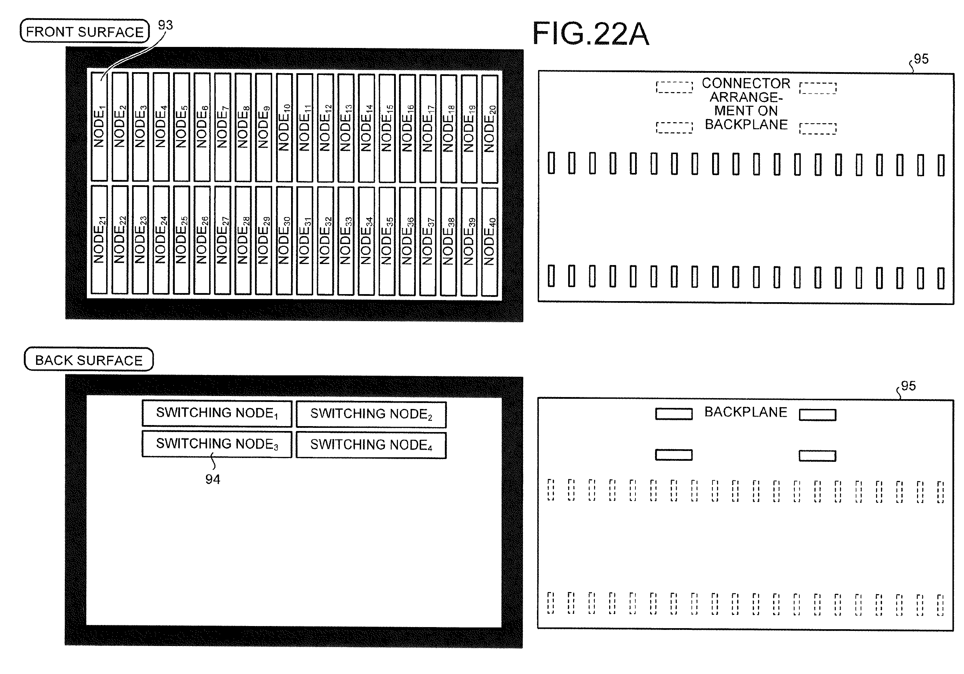

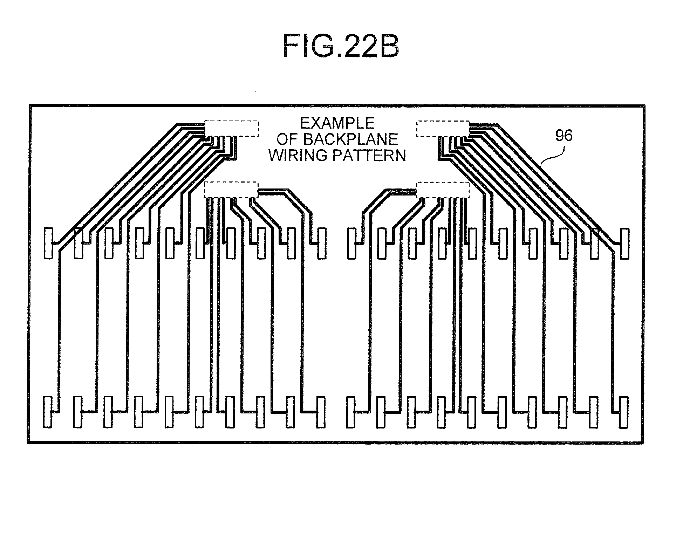

For example, several tens to hundreds of nodes are mounted in the rack. The nodes are connected to each other through a cable or a backplane. FIG. 21 is a diagram illustrating an example of a cable connection, and FIGS. 22A and 22B are diagrams illustrating an example of a backplane connection. FIG. 22A illustrates a front surface and a back surface of a housing utilizing the backplane connection, and FIG. 22B illustrates an example of a backplane wiring pattern.

In FIG. 21, thirty nodes 91 are connected to each other through cables via two switching nodes 92. In FIG. 22A, forty nodes 93 are connected to each other via four switching nodes 94 and a backplane 95. In FIG. 22A, the front surface of the housing is illustrated in the upper row, and the back surface of the housing is illustrated in the lower row.

As illustrated in FIG. 21, the number of cables is significantly increased as the number of nodes becomes large in the cable connection. Accordingly, when the cable connection is used, cable cost increases, maintenance by inserting or removing the cable is burdensome, and a space occupied by the cables increases.

On the other hand, as illustrated in FIG. 22B, a wiring pattern 96 becomes large scale as the number of nodes increases in the backplane connection. Accordingly, when the backplane connection is used, the wiring in the backplane is difficult, the number of layers in the backplane increases, and production cost increases. In addition, when the backplane connection is used, a risk caused by a failure in the backplane increases, and the entire system should be stopped to maintain the backplane.

Accordingly, a technique has been developed for performing data transfer between modules in the housing in a wireless manner without using the cable connection or the backplane connection (for example, refer to Japanese Laid-open Patent Publication No. 2005-6329). There is also related art in which a tray part connecting a server device and a console part of the server device communicates with the console part in a wireless manner (for example, refer to Japanese Laid-open Patent Publication No. 2006-185419).

Unfortunately, communication speed of wireless communication is lower than that of wired communication. Although some wireless communication techniques of which speed is substantially the same as that of the wired communication have been developed, high-speed wireless communication is not suitable for communication at a distance because radio waves are easily attenuated. Accordingly, in a case of connecting a large number of information processing devices with each other by high-speed wireless communication, communication is performed via a plurality of information processing devices, so that delay time is increased and the communication speed is reduced.

Accordingly, it is an object in one aspect of an embodiment of the invention to connect a large number of information processing devices with each other at high speed in a wireless manner.

### SUMMARY

According to an aspect of an embodiment, an information processing device includes a first communication unit that communicates with another information processing device using a first communication scheme; a second communication unit that communicates with another information processing device using a second communication scheme; and a control unit that determines a communication scheme for transmitting data to a destination based on information about a distance to an information processing device as the destination of the data, causes the first communication unit to transmit the data when the determined communication scheme is the first communication scheme, and causes the second communication unit to transmit the data when the determined communication scheme is the second communication scheme.

### BRIEF DESCRIPTION OF DRAWINGS

FIG. 1 is a diagram illustrating a configuration of an information processing system according to a first embodiment;
FIG. 2 is a diagram for explaining wireless local area network (WLAN) communication using an AP;
FIG. 3A is a diagram illustrating a configuration of an XB;
FIG. 3B is a diagram illustrating a configuration of another XB;
FIG. 4 is a diagram illustrating an arrangement of nodes;
FIG. 5A is a first diagram illustrating an example of a routing table according to the first embodiment;
FIG. 5B is a second diagram illustrating an example of the routing table according to the first embodiment;
FIG. 6 is a flowchart illustrating the procedure of transmission processing by the node according to the first embodiment;
FIG. 7 is a flowchart illustrating the procedure of reception processing by a node according to the first embodiment;
FIG. 8A is a first diagram illustrating an example of a routing table according to a second embodiment;
FIG. 8B is a second diagram illustrating an example of the routing table according to the second embodiment;
FIG. 9 is a flowchart illustrating the procedure of transmission processing by the node according to the second embodiment;
FIG. 10 is a flowchart illustrating the procedure of reception processing by the node according to the second embodiment;
FIG. 11 is a diagram illustrating an example of grouping the nodes;
FIG. 12A is a first diagram illustrating an example of a routing table according to a third embodiment;
FIG. 12B is a second diagram illustrating an example of the routing table according to the third embodiment;
FIG. 12C is a third diagram illustrating an example of the routing table according to the third embodiment;
FIG. 12D is a fourth diagram illustrating an example of the routing table according to the third embodiment;
FIG. 13 is a flowchart illustrating the procedure of transmission processing by a node according to the third embodiment;
FIG. 14 is a flowchart illustrating the procedure of reception processing by a node according to the third embodiment;
FIG. 15A is a diagram illustrating a configuration of an XB according to a fourth embodiment;
FIG. 15B is a diagram illustrating another configuration of the XB according to the fourth embodiment;
FIG. 16A is a first diagram illustrating an example of a routing table according to the fourth embodiment;
FIG. 16B is a second diagram illustrating an example of the routing table according to the fourth embodiment;
FIG. 17 is a flowchart illustrating the procedure of transmission processing by the node according to the fourth embodiment;
FIG. 18 is a flowchart illustrating the procedure of transmission processing by a node according to a fifth embodiment;
FIG. 19 is a diagram illustrating a configuration of an information processing system according to a sixth embodiment;
FIG. 20 is a diagram illustrating a hardware configuration of the XB that executes a communication program;
FIG. 21 is a diagram illustrating an example of a cable connection;
FIG. 22A is a diagram illustrating a front surface and a back surface of a housing using a backplane connection; and
FIG. 22B is a diagram illustrating an example of a backplane wiring pattern.

### DESCRIPTION OF EMBODIMENTS

Preferred embodiments of the present invention will be explained with reference to accompanying drawings. A technique disclosed herein is not limited to the embodiments described below.

### [a] First embodiment

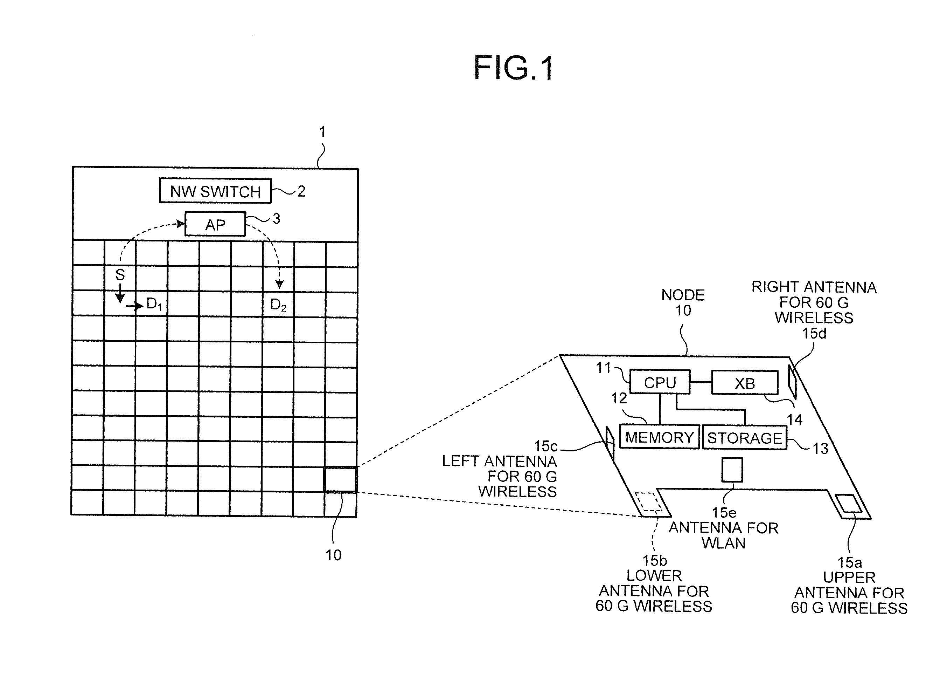

First, the following describes a configuration of an information processing system according to a first embodiment. FIG. 1 is a diagram illustrating the configuration of the information processing system according to the first embodiment. As illustrated in FIG. 1, the information processing system is a highly integrated server including an NW switch 2, an AP 3, and the ninety-nine nodes 10 mounted in a rack 1. Although one NW switch 2 and ninety-nine nodes 10 are mounted in the rack 1 herein, more NW switches 2, more nodes 10, or less nodes 10 may be mounted in one rack.

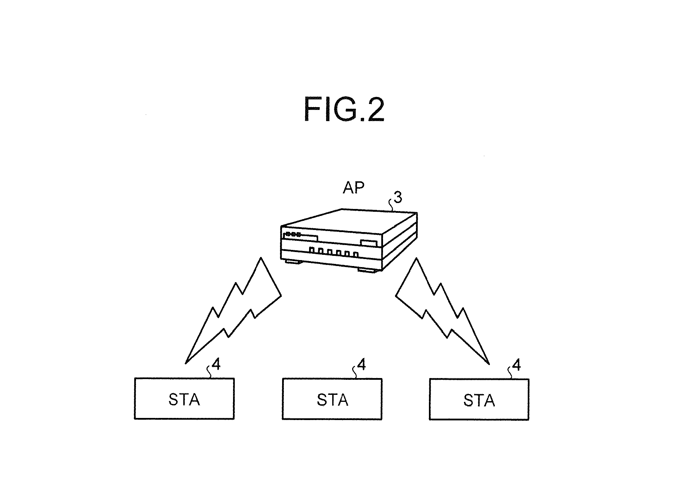

The NW switch 2 is a switch for connecting with an external network such as the Internet. The AP 3 is an access point of a wireless local area network (WLAN) using a frequency of 2.4 GHz band and 5 GHz band. FIG. 2 is a diagram for explaining WLAN communication using the AP 3. FIG. 2 is a wireless system including the AP 3 and three stations (STAs) 4.

As illustrated in FIG. 2, when transferring data to the other STA 4, the STA 4 transfers the data via the AP 3. Accordingly, when the number of STAs 4 is large, the data concentrates on the AP 3 and congestion occurs. Communication speed of WLAN is about 600 Mbits/second (Mbps) and wired communication speed is higher than 1.0 Gbit/second (Gbps), so that the communication speed of WLAN is lower than the wired communication speed.

A communication mode illustrated in FIG. 2 is called an infrastructure mode, and communication between devices is performed via the AP 3. On the other hand, a mode in which the devices directly communicate with each other without using the AP 3 is called an ad hoc mode. The infrastructure mode is suitable for a case in which a large number of devices communicate with each other, and the ad hoc mode is suitable for a case in which a small number of devices communicate with each other.

The node 10 is an information processing device including a CPU 11, a memory 12, a storage 13, and an XB 14. The node 10 also includes an upper antenna for 60 G wireless 15a, a lower antenna for 60 G wireless 15b, a left antenna for 60 G wireless 15c, a right antenna for 60 G wireless 15d, and an antenna for WLAN 15e. The nodes 10 are housed in a housing. The upper antenna for 60 G wireless 15a, the lower antenna for 60 G wireless 15b, the left antenna for 60 G wireless 15c, the right antenna for 60 G wireless 15d, and the antenna for WLAN 15e are connected to the XB 14.

The CPU 11 is a central processing unit that reads and executes a computer program from the memory 12. The memory 12 is a random access memory (RAM) that stores therein the computer program or results in the midway obtained in the execution of the computer program. The storage 13 is a nonvolatile memory that stores therein data, for example, a NAND flash memory. The storage 13 also stores therein the computer program installed in the node 10.

The XB 14 is a crossbar switch for communicating with an other node 10. The XB 14 is one LSI. The upper antenna for 60 G wireless 15a is an antenna for 60 G wireless that uses a frequency of 60 GHz band, installed facing upward, and used for communicating with the node 10 adjacent above in the rack 1. Similarly, the lower antenna for 60 G wireless 15b is the antenna for 60 G wireless, installed facing downward, and used for communicating with the node 10 adjacent below in the rack 1.

The left antenna for 60 G wireless 15c is the antenna for 60 G wireless, installed facing leftward, and used for communicating with the node 10 adjacent on the left in the rack 1. The right antenna for 60 G wireless 15d is the antenna for 60 G wireless, installed facing rightward, and used for communicating with the node 10 adjacent on the right in the rack 1.

Communication speed of the 60 G wireless can be about several Gbps, which is higher than that of the WLAN. However, radio waves hardly reach in the 60 G wireless and the housing blocks the radio waves, so that it is difficult to communicate with the adjacent upper, lower, left, and right nodes 10 using one 60 G wireless module. Accordingly, the node 10 includes four 60 G wireless modules that communicate with the adjacent upper, lower, left, and right nodes 10, respectively. The antenna for WLAN 15e is a WLAN antenna.

The node 10 communicates with other nodes 10 having a distance therefrom equal to or smaller than a predetermined threshold using the 60 G wireless, and communicates with other nodes 10 having a distance therefrom larger than the predetermined threshold using the WLAN. For example, in FIG. 1, in a case of communicating with an other node 10 positioned at D₁, a node 10 positioned at S in the rack 1 performs communication via a node positioned below in the rack 1 using the 60 G wireless because the distance therebetween is short. In a case of communicating with an other node 10 positioned at D₂, the node 10 positioned at S in the rack 1 performs communication using the WLAN via the AP 3 because the distance therebetween is long.

In this way, the node 10 communicates with the other nodes 10 having the distance therefrom smaller than the predetermined threshold using the 60 G wireless, and communicates with the other nodes 10 having the distance therefrom equal to or larger than the predetermined threshold using the WLAN. Accordingly, the node 10 can perform wireless communication at high speed with a large number of nodes 10 without causing congestion at the AP 3.

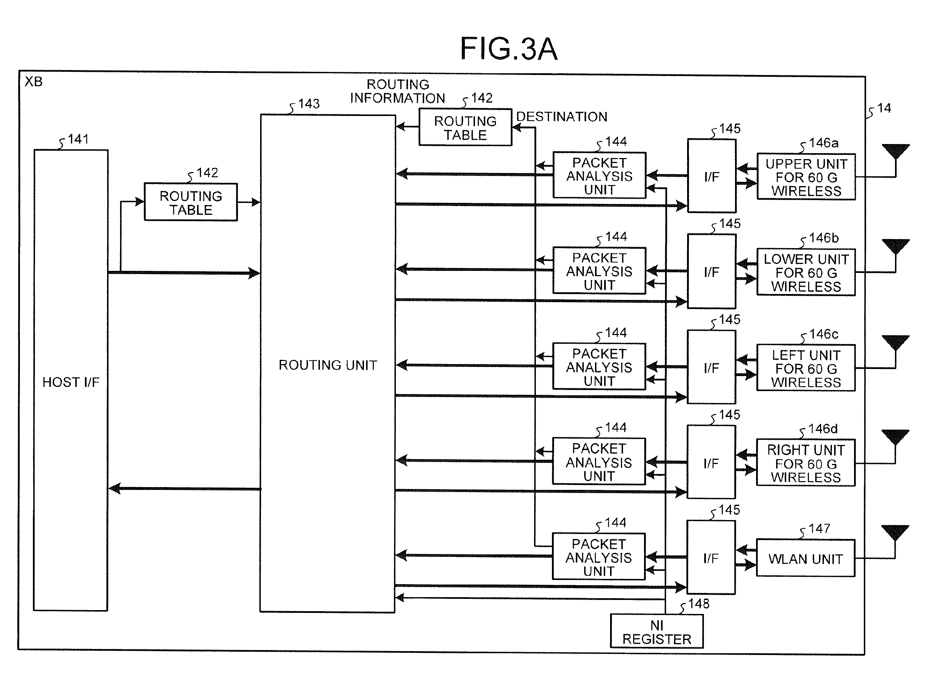

The following describes a configuration of the XB 14. FIG. 3A is a diagram illustrating the configuration of the XB 14. As illustrated in FIG. 3A, the XB 14 includes a host interface (I/F) 141, two routing tables 142, a routing unit 143, five packet analysis units 144, and five I/Fs 145. The XB 14 also includes an upper unit for 60 G wireless 146a, a lower unit for 60 G wireless 146b, a left unit for 60 G wireless 146c, a right unit for 60 G wireless 146d, a WLAN unit 147, and an NI register 148.

The host I/F 141 is an interface with the CPU 11 of its own node. The host I/F 141 passes a packet received from the CPU 11 to the routing unit 143, and passes a packet received from the routing unit 143 to the CPU 11 of the own node. The host I/F 141 also passes a destination of the packet received from the CPU 11 of the own node to the routing table 142.

The routing table 142 is a retrieval table for retrieving routing information that indicates a routing destination from the destination of the packet. The routing unit 143 receives the packet from the host I/F 141, and passes the packet to any of the I/Fs 145 based on the routing information received from the routing table 142 and information of the NI register 148. The routing unit 143 also receives the packet from any of the packet analysis units 144, and passes the packet to the host I/F 141 or any of the I/Fs 145 based on the routing information received from the routing table 142 and the information of the NI register 148.

The packet analysis unit 144 receives the packet from the I/F 145, analyzes the packet based on the information of the NI register 148, and extracts a destination. The packet analysis unit 144 passes the extracted destination to the routing table 142 and passes the packet to the routing unit 143.

The I/F 145 converts a signal received from the 60 G wireless module or the WLAN unit 147 into a packet, and passes the packet to the corresponding packet analysis unit 144. The I/F 145 receives the packet routed by the routing unit 143, and instructs the corresponding 60 G wireless module or the corresponding WLAN module to transmit the packet. The upper unit for 60 G wireless 146a, the lower unit for 60 G wireless 146b, the left unit for 60 G wireless 146c, and the right unit for 60 G wireless 146d are 60 G wireless modules that perform wireless communication using a frequency of 60 GHz band.

The upper unit for 60 G wireless 146a performs wireless communication with the node 10 adjacent above in the rack 1 using the upper antenna for 60 G wireless 15a illustrated in FIG. 1. The lower unit for 60 G wireless 146b performs wireless communication with the node 10 adjacent below in the rack 1 using the lower antenna for 60 G wireless 15b illustrated in FIG. 1. The left unit for 60 G wireless 146c performs wireless communication with the node 10 adjacent on the left in the rack 1 using the left antenna for 60 G wireless 15c illustrated in FIG. 1. The right unit for 60 G wireless 146d performs wireless communication with the node 10 adjacent on the right in the rack 1 using the right antenna for 60 G wireless 15d illustrated in FIG. 1.

The WLAN unit 147 has a function of the STA 4, and communicates with the WLAN unit 147 in an other node 10 via the AP 3 using the WLAN. The NI register 148 is a register that stores therein information about the own node such as a node identifier (ID), an Internet Protocol (IP) address, and a media access control (MAC) address.

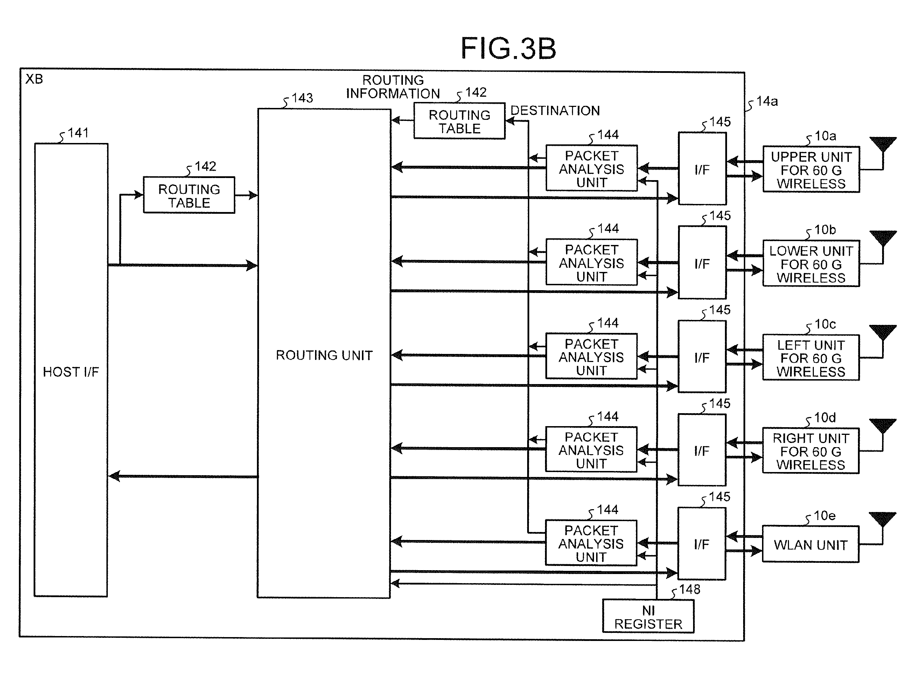

Although the XB 14 illustrated in FIG. 3A includes the 60 G wireless modules and the WLAN unit 147, the 60 G wireless modules and the WLAN unit 147 may be provided outside the XB. The FIG. 3B is a diagram illustrating another configuration of the XB of which the 60 G wireless modules and the WLAN unit 147 are provided outside.

As illustrated in FIG. 3B, an XB 14a does not include the upper unit for 60 G wireless 146a, the lower unit for 60 G wireless 146b, the left unit for 60 G wireless 146c, the right unit for 60 G wireless 146d, and the WLAN unit 147. The XB 14a performs wireless communication using an upper unit for 60 G wireless 10a, a lower unit for 60 G wireless 10b, a left unit for 60 G wireless 10c, a right unit for 60 G wireless 10d, and a WLAN unit 10e provided outside.

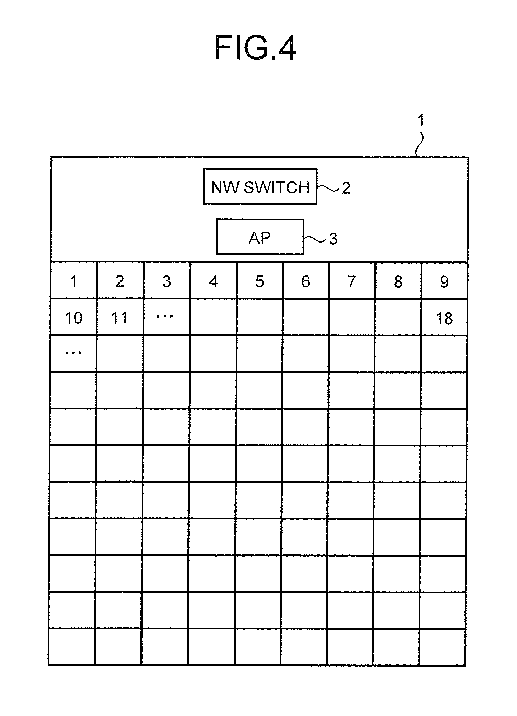

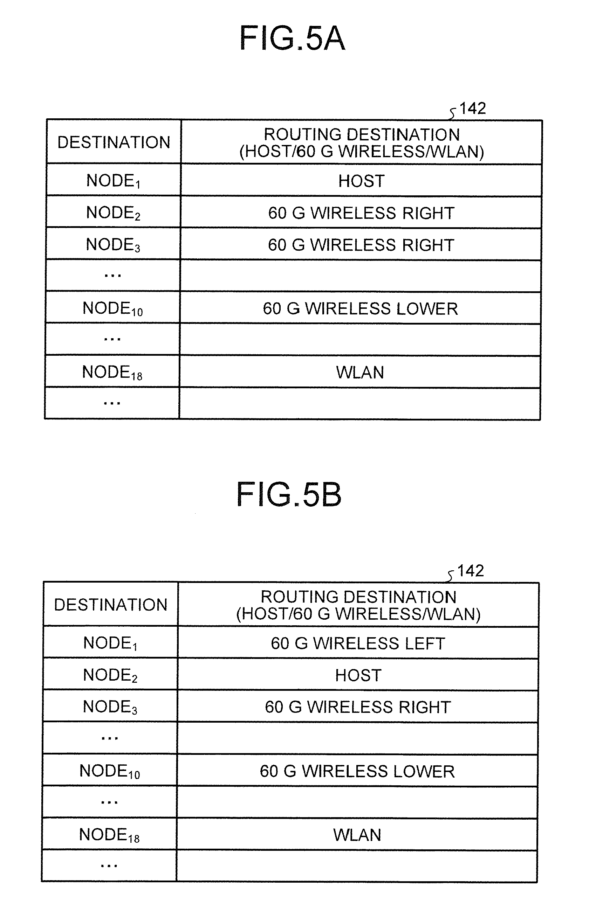

The following describes details about the routing table 142 with reference to FIGS. 4, 5A, and 5B. FIG. 4 is a diagram illustrating an arrangement of the nodes 10, and FIGS. 5A and 5B are diagrams illustrating an example of the routing table 142 according to the first embodiment. In FIG. 4, "1, 2, ..., and 18" represent the numbers for identifying each node 10. That is, FIG. 4 illustrates an arrangement such that a node₁, a node₂, ..., a node₉ are arranged from the upper left toward the right in the rack 1, and a node₁₀, a node₁₁, ... , a node₁₈ are arranged in the next row.

FIG. 5A illustrates the routing table 142 set to the node₁ in a case of the node arrangement illustrated in FIG. 4, and FIG. 5B illustrates the routing table 142 set to the node₂ in a case of the node arrangement illustrated in FIG. 4.

As illustrated in FIG. 5A, the routing destination is associated with the destination of the packet in the routing table 142 of the node₁. In FIG. 5A, the routing destination "60 G wireless right" indicates that the routing destination is the right unit for 60 G wireless 146d, and the routing destination "60 G wireless lower" indicates that the routing destination is the lower unit for 60 G wireless 146b. Similarly, the routing destination "60 G wireless left" indicates that the routing destination is the left unit for 60 G wireless 146c, and the routing destination "60 G wireless upper" indicates that the routing destination is the upper unit for 60 G wireless 146a. The routing destination "WLAN" indicates that the routing destination is the WLAN unit 147.

For example, when the destination of the packet is the node₁, that is, the own node, the routing destination is the CPU 11 of the host, that is, the own node. When the destination of the packet is the node₂, the routing destination is the right unit for 60 G wireless 146d because the node₂ is arranged on the right.

When the destination of the packet is the node₁, the routing destination is the right unit for 60 G wireless 146d because the node₃ is arranged in the right direction. When the destination of the packet is the node₁₀, the routing destination is the lower unit for 60 G wireless 146b because the node₁₀ is arranged below. When the destination of the packet is the node₁₈, a distance to the node₁₈ is 9 assuming that the distance is the number of nodes 10 through which the packet passes. For example, assuming that a threshold of the distance is 4, the node₁₈ is at a distance, so that the routing destination is the WLAN unit 147.

In the routing table 142 of the node₂ illustrated in FIG. 5B, when the destination of the packet is the node₁, the routing destination is the left unit for 60 G wireless 146c because the node₁ is arranged on the left. When the destination of the packet is the node₂, the routing destination is the CPU 11 of the host, that is, the own node.

When the destination of the packet is the node₃, the routing destination is the right unit for 60 G wireless 146d because the node₃ is arranged on the right. When the destination of the packet is the node₁₀, the routing destination is the lower unit for 60 G wireless 146b because the node₁₀ is arranged at the lower left. In this case, the routing destination may be the left unit for 60 G wireless 146c. When the destination of the packet is the node₁₈, a distance to the node₁₈ is 8 assuming that the distance is the number of nodes 10 through which the packet passes. For example, assuming that the threshold of the distance is 4, the node₁₈ is at a distance, so that the routing destination is the WLAN unit 147.

In this way, the routing table 142 is set such that the routing is performed to the 60 G wireless module for a close node 10, and the routing is performed to the WLAN module for a distant node 10. Accordingly, the node 10 can transmit the data to the close node 10 at high speed using the 60 G wireless module, and can transmit the data to the distant node 10 by one hop using the WLAN module. Due to this, the node 10 can transmit the data to the distant node 10 with efficiency.

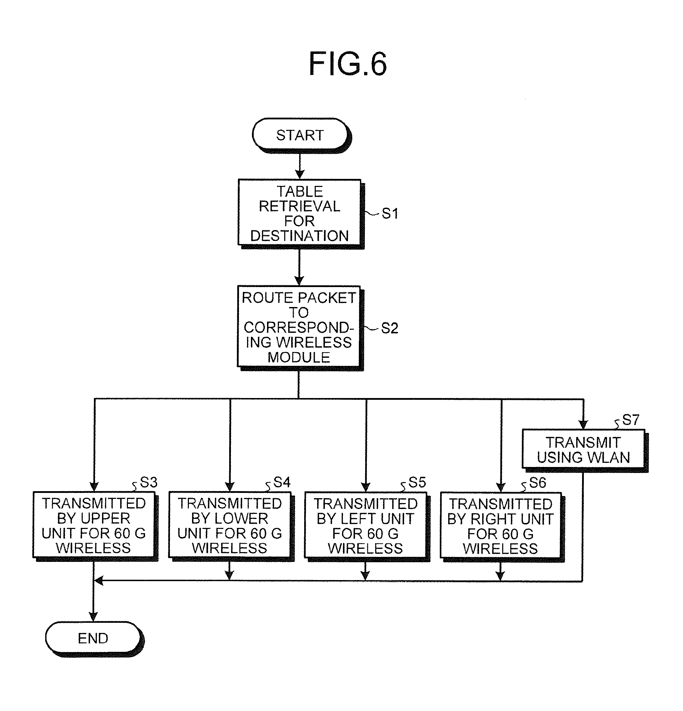

The following describes the procedure of transmission processing by the node 10 according to the first embodiment. FIG. 6 is a flowchart illustrating the procedure of the transmission processing by the node 10 according to the first embodiment. As illustrated in FIG. 6, the node 10 performs table retrieval for a destination using the routing table 142 (Step S1), and routes the packet to the corresponding wireless module (Step S2).

If the routing destination is the upper unit for 60 G wireless 146a, the upper unit for 60 G wireless 146a transmits the packet using the 60 G wireless (Step S3). If the routing destination is the lower unit for 60 G wireless 146b, the lower unit for 60 G wireless 146b transmits the packet using the 60 G wireless (Step S4).

If the routing destination is the left unit for 60 G wireless 146c, the left unit for 60 G wireless 146c transmits the packet using the 60 G wireless (Step S5). If the routing destination is the right unit for 60 G wireless 146d, the right unit for 60 G wireless 146d transmits the packet using the 60 G wireless (Step S6). If the routing destination is the WLAN unit 147, the WLAN unit 147 transmits the packet using the WLAN (Step S7).

The following describes the procedure of reception processing by the node 10 according to the first embodiment.

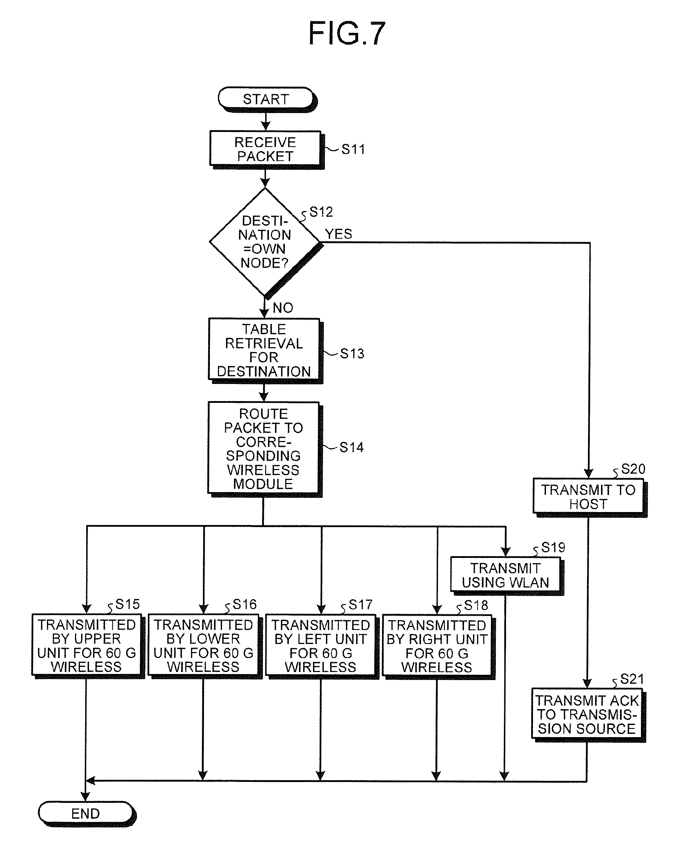

FIG. 7 is a flowchart illustrating the procedure of the reception processing by the node 10 according to the first embodiment. As illustrated in FIG. 7, when receiving the packet (Step S11), the node 10 determines whether the destination of the packet is the own node (Step S12). If the destination of the packet is the own node, the packet is transmitted to the host (Step S20), and the node 10 transmits ACK to a transmission source (Step S21).

On the other hand, if the destination of the packet is not the own node, the node 10 performs table retrieval for the destination using the routing table 142 (Step S13), and routes the packet to the corresponding wireless module (Step S14).

If the routing destination is the upper unit for 60 G wireless 146a, the upper unit for 60 G wireless 146a transmits the packet using the 60 G wireless (Step S15). If the routing destination is the lower unit for 60 G wireless 146b, the lower unit for 60 G wireless 146b transmits the packet using the 60 G wireless (Step S16).

If the routing destination is the left unit for 60 G wireless 146c, the left unit for 60 G wireless 146c transmits the packet using the 60 G wireless (Step S17). If the routing destination is the right unit for 60 G wireless 146d, the right unit for 60 G wireless 146d transmits the packet using the 60 G wireless (Step S18). If the routing destination is the WLAN unit 147, the WLAN unit 147 transmits the packet using the WLAN (Step S19).

In this way, the node 10 determines the routing destination of the packet using the routing table 142, so that the node 10 can properly use the 60 G wireless and the WLAN by setting the routing destination based on the distance from the node 10 in the routing table 142.

As described above, in the first embodiment, the routing table 142 stores therein whether the routing destination is the 60 G wireless or the WLAN based on the distance between the own node and the destination node 10. Accordingly, the node 10 can properly use the 60 G wireless and the WLAN by retrieving the routing table 142, so that the information processing system can connect a large number of nodes 10 with each other at high speed in a wireless manner.

In the first embodiment, the node 10 performs 60 G wireless communication with adjacent upper, lower, left, and right nodes 10 using four 60 G wireless antennas arranged in the upper, lower, left, and right directions. Accordingly, the node 10 can prevent the housing from interfering with radio waves and perform wireless communication with the adjacent node 10 with high reliability.

### [b] Second embodiment

In the first embodiment, the routing table 142 has been described in which the routing destination is set to either the 60 G wireless or the WLAN based on the distance between the own node and the destination node 10. Alternatively, the node 10 may determine the routing destination to be the WLAN or the 60 G wireless using the routing table 142 in which the distance between the own node and the destination node 10 is set. In the second embodiment, the following describes a case in which the node 10 determines the routing destination to be the WLAN or the 60 G wireless using the routing table 142 in which the distance between the own node and the destination node 10 is set.

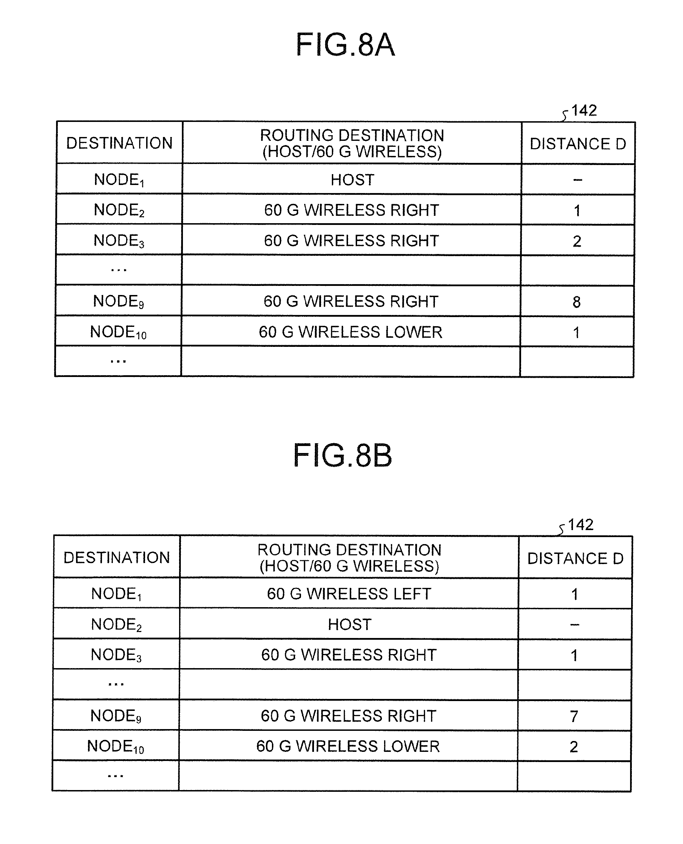

FIGS. 8A and 8B are diagrams illustrating an example of the routing table 142 according to the second embodiment. FIG. 8A illustrates an example of the routing table 142 set to the node₁ in a case of the node arrangement illustrated in FIG. 4, and FIG. 8B illustrates an example of the routing table 142 set to the node₂ in a case of the node arrangement illustrated in FIG. 4.

As illustrated in FIG. 8A, in the routing table 142 of the node₁, the destination of the packet is associated with the routing destination and a distance D. Herein, the distance D is the number of hops of the node 10 to the destination. For example, if the destination of the packet is the node₁, that is, the own node, the routing destination is the host and there is no distance D. If the destination of the packet is the node₂, the node₂ is arranged on the right, so that the routing destination is the right unit for 60 G wireless 146d and the distance D is 1.

If the destination of the packet is the node₃, the node₃ is arranged on the right of the node₂, so that the routing destination is the right unit for 60 G wireless 146d and the distance D is 2. If the destination of the packet is the node₉, the node₉ is arranged at the right end, so that the routing destination is the right unit for 60 G wireless 146d and the distance is 8. If the destination of the packet is the node₁₀, the node₁₀ is arranged below, so that the routing destination is the lower unit for 60 G wireless 146b and the distance is 1.

In the routing table 142 of the node₂ as illustrated in FIG. 8B, if the destination of the packet is the node₁, the node₁ is arranged on the left, so that the routing destination is the left unit for 60 G wireless 146c and the distance D is 1. If the destination of the packet is the node₂, the routing destination is the CPU 11 of the host, that is, the own node, and there is no distance D.

If the destination of the packet is the node₃, the node₃ is arranged on the right, so that the routing destination is the right unit for 60 G wireless 146d and the distance D is 1. If the destination of the packet is the node₉, the node₉ is arranged at the right end, so that the routing destination is the right unit for 60 G wireless 146d and the distance D is 7. If the destination of the packet is the node₁₀, the node₁₀ is arranged on the lower left, so that the routing destination is the lower unit for 60 G wireless 146b and the distance D is 2. In this case, the routing destination may be the left unit for 60 G wireless 146c.

In this way, the distance D to the destination node 10 is set in the routing table 142. Accordingly, the node 10 compares the distance D with a threshold Dth. If D > Dth, the node 10 uses the WLAN module. If D ≤ Dth, the node 10 uses the 60 G wireless module. Due to this, the node 10 can transmit the data to the distant node 10 with efficiency. The threshold Dth is stored in the NI register 148.

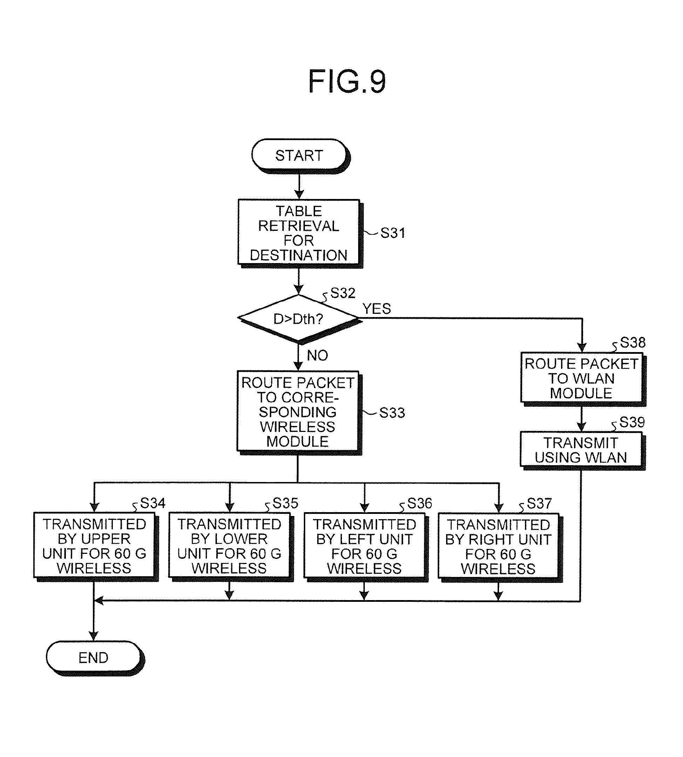

The following describes the procedure of transmission processing by the node 10 according to the second embodiment. FIG. 9 is a flowchart illustrating the procedure of the transmission processing by the node 10 according to the second embodiment. As illustrated in FIG. 9, the node 10 performs table retrieval for the destination using the routing table 142 (Step S31), and acquires the routing destination and the distance D. The node 10 then determines whether D is larger than Dth (Step S32). If D is not larger than Dth, the node 10 routes the packet to the corresponding wireless module (Step S33).

If the routing destination is the upper unit for 60 G wireless 146a, the upper unit for 60 G wireless 146a transmits the packet using the 60 G wireless (Step S34). If the routing destination is the lower unit for 60 G wireless 146b, the lower unit for 60 G wireless 146b transmits the packet using the 60 G wireless (Step S35).

If the routing destination is the left unit for 60 G wireless 146c, the left unit for 60 G wireless 146c transmits the packet using the 60 G wireless (Step S36). If the routing destination is the right unit for 60 G wireless 146d, the right unit for 60 G wireless 146d transmits the packet using the 60 G wireless (Step S37).

On the other hand, if D is larger than Dth, the node 10 routes the packet to the WLAN module (Step S38), and the WLAN unit 147 transmits the packet using the WLAN (Step S39).

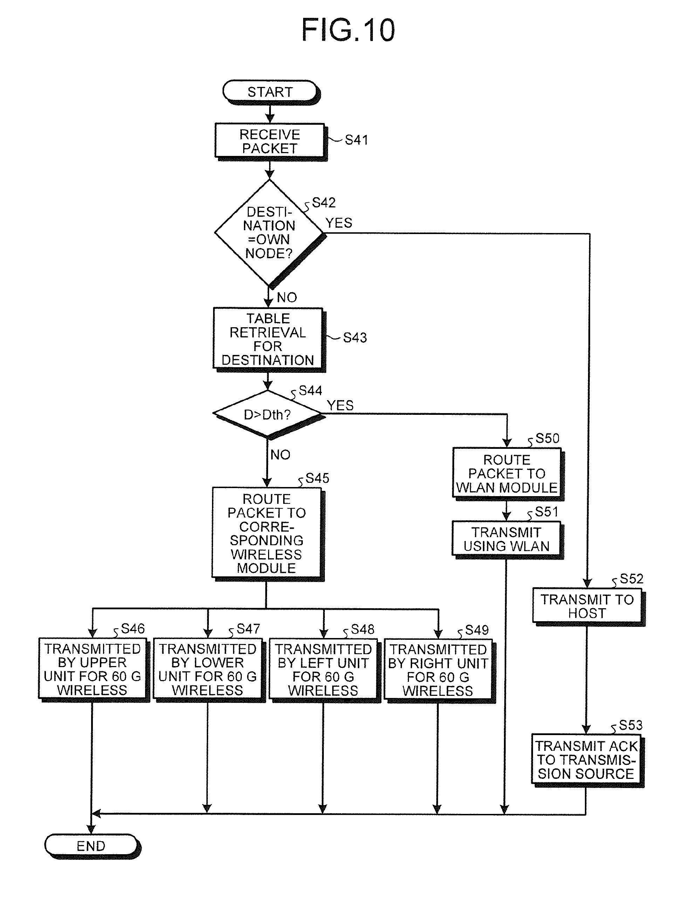

The following describes the procedure of reception processing by the node 10 according to the second embodiment. FIG. 10 is a flowchart illustrating the procedure of the reception processing by the node 10 according to the second embodiment. As illustrated in FIG. 10, when receiving the packet (Step S41), the node 10 determines whether the destination of the packet is the own node (Step S42). If the destination of the packet is the own node, the packet is transmitted to the host (Step S52), and the node 10 transmits the ACK to the transmission source (Step S53).

On the other hand, if the destination of the packet is not the own node, the node 10 performs table retrieval for the destination using the routing table 142 (Step S43), and acquires the routing destination and the distance D. The node 10 then determines whether D is larger than Dth (Step S44). If D is not larger than Dth, the node 10 routes the packet to the corresponding wireless module (Step S45).

If the routing destination is the upper unit for 60 G wireless 146a, the upper unit for 60 G wireless 146a transmits the packet using the 60 G wireless (Step S46). If the routing destination is the lower unit for 60 G wireless 146b, the lower unit for 60 G wireless 146b transmits the packet using the 60 G wireless (Step S47).

If the routing destination is the left unit for 60 G wireless 146c, the left unit for 60 G wireless 146c transmits the packet using the 60 G wireless (Step S48). If the routing destination is the right unit for 60 G wireless 146d, the right unit for 60 G wireless 146d transmits the packet using the 60 G wireless (Step S49).

On the other hand, if D is larger than Dth, the node 10 routes the packet to the WLAN module (Step S50), and the WLAN unit 147 transmits the packet using the WLAN (Step S51).

In this way, the node 10 compares the threshold Dth with the distance D acquired from the routing table 142 to determine the routing destination of the packet. Accordingly, the node 10 can properly use the 60 G wireless and the WLAN by setting the distance D from the node 10 in the routing table 142.

As described above, in the second embodiment, the distance D from the own node to the destination node 10 is set in the routing table 142. Accordingly, the node 10 can properly use the 60 G wireless and the WLAN by retrieving the distance D from the routing table 142 to compare the distance D with the threshold Dth, so that the information processing system can connect a large number of nodes 10 with each other at high speed in a wireless manner.

### [c] Third embodiment

In the first and the second embodiments, described is the case in which each node 10 has the STA function of the WLAN. Alternatively, the node 10 having the STA function can be limited. The following describes a case of limiting the node 10 having the STA function.

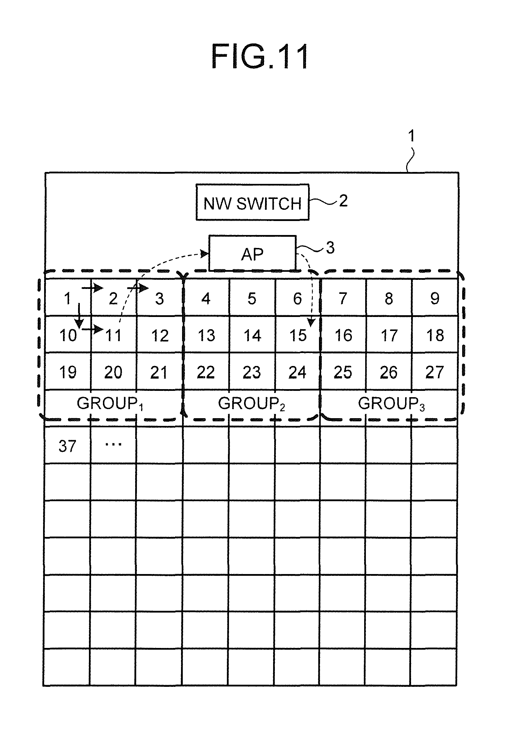

First, grouping of the nodes 10 will be described. FIG. 11 is a diagram illustrating an example of grouping the nodes 10. As illustrated in FIG. 11, every twelve nodes 10 close to each other are grouped. For example, a group₁ includes the node₁ to the node₃, the node₁₀ to the node₁₂, the node₁₉ to the node₂₁, and the node₂₈ to the node₃₀, and a group₂ includes the node₄ to the node₆, the node₁₃ to the node₁₅, the node₂₂ to the node₂₄, and the node₃₁ to the node₃₃. A group₃ includes the node₇ to the node₉, the node₁₆ to the node₁₈, the node₂₅ to the node₂₇, and the node₃₄ to the node₃₆.

In each group, only one node 10 has the STA function of the WLAN. For example, in the group₁, only the node₁₁ has the STA function. Each node 10 uses the 60 G wireless to communicate with an other node 10 in the group, and uses the WLAN to communicate with a node 10 outside the group.

For example, the node₁ uses the 60 G wireless to transmit the packet to the node₃ in the group. On the other hand, to transmit the packet to the node₁₅ outside the group, the node₁ transmits the packet to the node₁₅ using the WLAN via the node₁₁ having the STA function. The node₁ transmits the packet to the node₁₁ using the 60 G wireless.

In this way, by grouping the nodes 10 and limiting the node 10 having the STA function of the WLAN to be only one in the group, the information processing system can reduce the number of nodes connected to the AP 3 and prevent congestion at the AP 3.

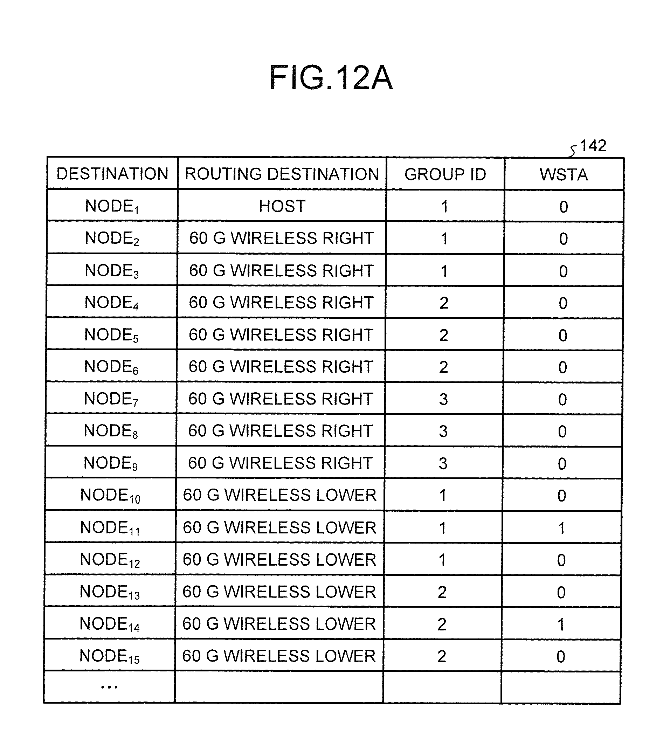

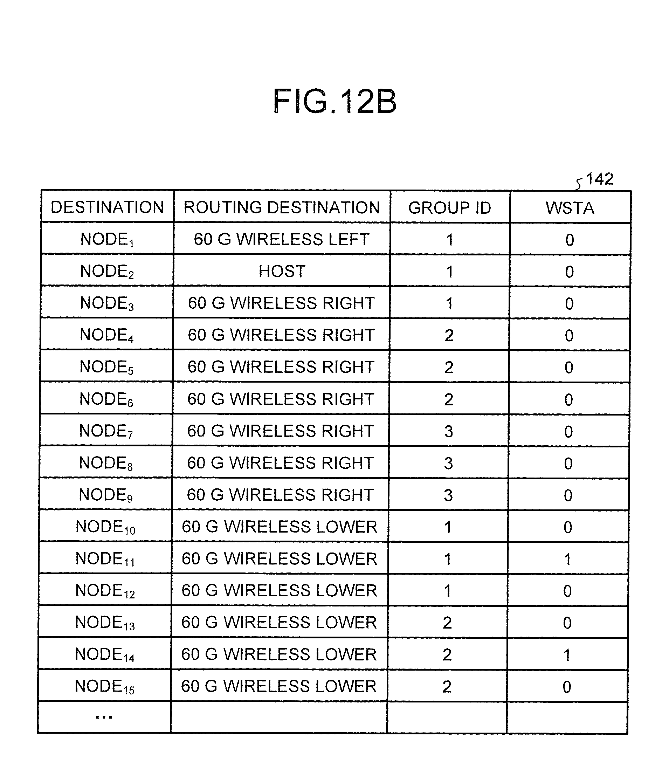

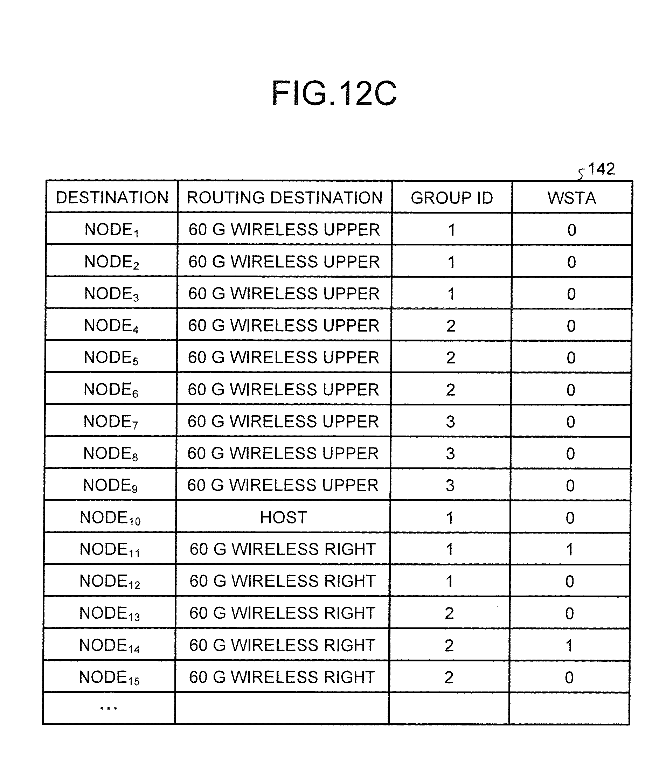

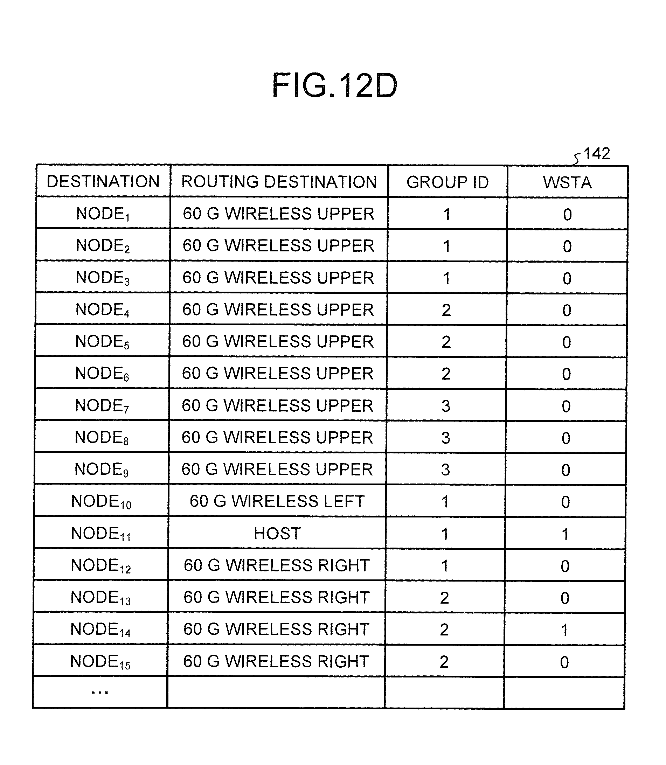

FIGS. 12A to 12D are diagrams illustrating an example of the routing table 142 according to the third embodiment. Corresponding to the grouping illustrated in FIG. 11, FIG. 12A illustrates the routing table 142 of the node₁ and FIG. 12B illustrates the routing table 142 of the node₂. Corresponding to the grouping illustrated in FIG. 11, FIG. 12C illustrates the routing table 142 of the node₁₀ and FIG. 12D illustrates the routing table 142 of the node₁₁.

As illustrated in FIGS. 12A to 12D, the routing table 142 stores therein a destination, a routing destination, a group ID, and a WSTA in association with each other. The group ID represents an identifier for identifying a group to which the destination node 10 belongs. The WSTA represents whether the destination node 10 has the STA function of the WLAN, in which "0" indicates that the destination node 10 does not have the STA function and "1" indicates that the destination node 10 has the STA function.

For example, in the routing table 142 of the node₁ as illustrated in FIG. 12A, if the destination of the packet is the node₁, that is, the own node, the routing destination is the host, the group ID is 1, and the WSTA is 0. If the destination of the packet is the node₂, the node₂ is arranged on the right, so that the routing destination is the right unit for 60 G wireless 146d, the group ID is 1, and the WSTA is 0.

If the destination of the packet is the node₁₁, the node₁₁ is arranged on the lower right of the node₁, so that the routing destination is the lower unit for 60 G wireless 146b, the group ID is 1, and the WSTA is 1 because the node₁₁ has the STA function. If the destination of the packet is the node₁₄, the node₁₄ belongs to an other group and the node₁₁ having the STA function within the group is arranged on the lower right, so that the routing destination is the lower unit for 60 G wireless 146b, the group ID is 2, and the WSTA is 1 because the node₁₄ has the STA function.

In the routing table 142 of the node₂ as illustrated in FIG. 12B, for example, if the destination of the packet is the node₁, the node₁ is arranged on the left, so that the routing destination is the left unit for 60 G wireless 146c, the group ID is 1, and the WSTA is 0. If the destination of the packet is the node₂, the routing destination is the CPU 11 of the host, that is, the own node, the group ID is 1, and the WSTA is 0.

In the routing table 142 of the node₁₀ as illustrated in FIG. 12C, for example, if the destination of the packet is the node₁, the node₁ is arranged above, so that the routing destination is the upper unit for 60 G wireless 146a, the group ID is 1, and the WSTA is 0. If the destination of the packet is the node₁₀, the routing destination is the CPU 11 of the host, that is, the own node, the group ID is 1, and the WSTA is 0.

In the routing table 142 of the node₁₁ as illustrated in FIG. 12D, for example, if the destination of the packet is the node₁, the node₁ is arranged on the upper left, so that the routing destination is the upper unit for 60 G wireless 146a, the group ID is 1, and the WSTA is 0. If the destination of the packet is the node₁₁, the routing destination is the CPU 11 of the host, that is, the own node, the group ID is 1, and the WSTA is 1 because the node₁₁ has the STA function.

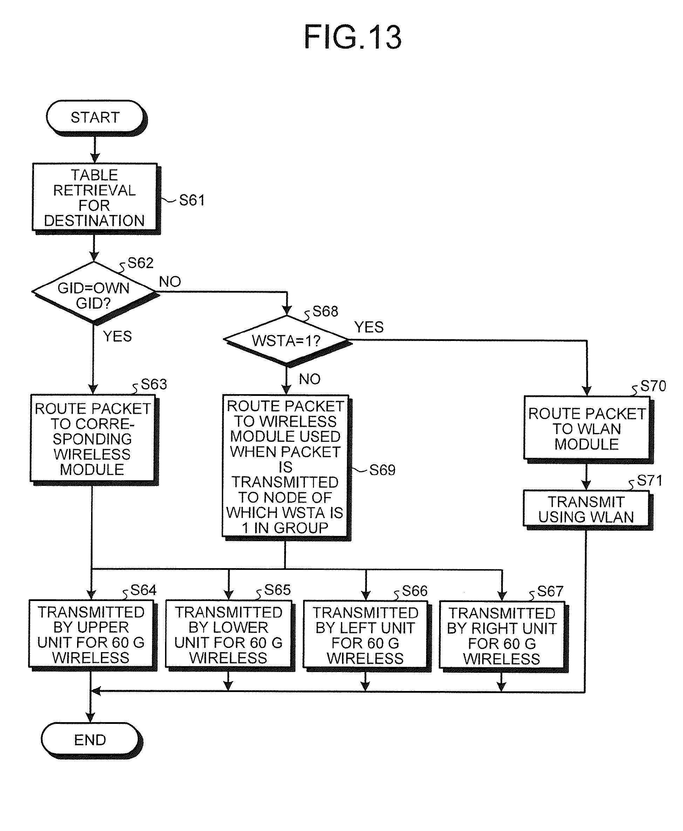

The following describes the procedure of transmission processing by the node 10 according to the third embodiment. FIG. 13 is a flowchart illustrating the procedure of the transmission processing by the node 10 according to the third embodiment. As illustrated in FIG. 13, the node 10 performs table retrieval for the destination using the routing table 142 (Step S61), and acquires the routing destination and the group ID. The node 10 then determines whether the GID is the same as its own GID, that is, whether the group ID is the same as the group ID of the own node (Step S62). If the GID is the same as the own GID, the node 10 routes the packet to the corresponding wireless module (Step S63).

If the routing destination is the upper unit for 60 G wireless 146a, the upper unit for 60 G wireless 146a transmits the packet using the 60 G wireless (Step S64). If the routing destination is the lower unit for 60 G wireless 146b, the lower unit for 60 G wireless 146b transmits the packet using the 60 G wireless (Step S65).

If the routing destination is the left unit for 60 G wireless 146c, the left unit for 60 G wireless 146c transmits the packet using the 60 G wireless (Step S66). If the routing destination is the right unit for 60 G wireless 146d, the right unit for 60 G wireless 146d transmits the packet using the 60 G wireless (Step S67).

On the other hand, if the GID is not the same as the own GID (No at Step S62), which is a case in which the packet is transmitted to an other group, the node 10 determines whether the WSTA of the own node is 1 (Step S68). If the WSTA of the own node is not 1, the node 10 routes the packet to the wireless module used in a case of transmitting the packet to the node 10 of which WSTA is 1 in the group (Step S69), and the process proceeds to any of Steps S64 to S67.

On the other hand, if the WSTA of the own node is 1, the node 10 routes the packet to the WLAN module (Step S70), and the WLAN unit 147 transmits the packet using the WLAN (Step S71).

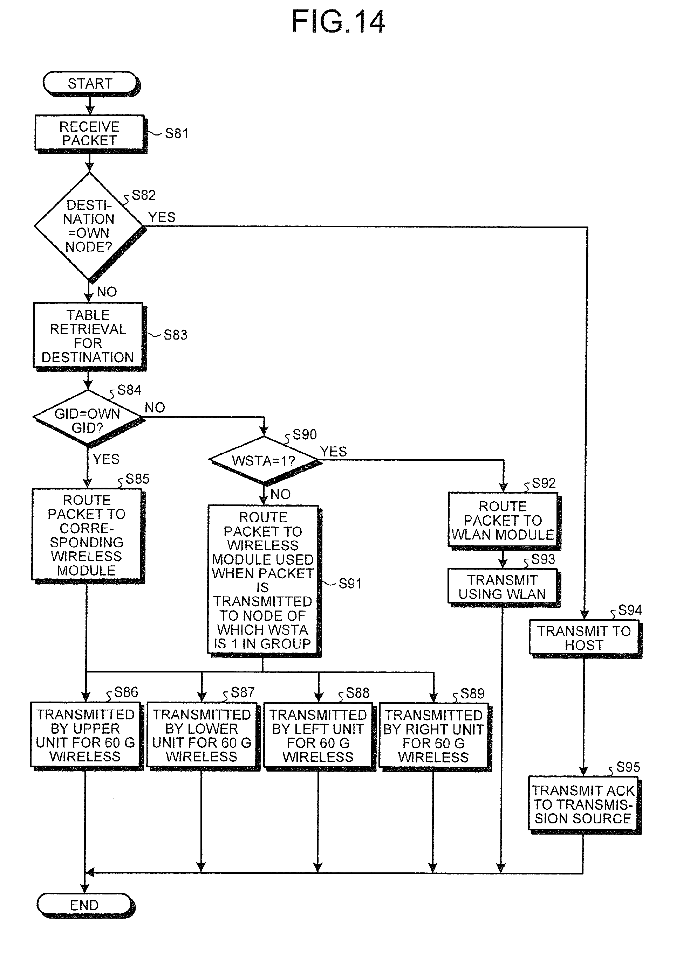

The following describes the procedure of reception processing by the node 10 according to the third embodiment. FIG. 14 is a flowchart illustrating the procedure of the reception processing by the node 10 according to the third embodiment. As illustrated in FIG. 14, when receiving the packet (Step S81), the node 10 determines whether the destination of the packet is the own node (Step S82). If the destination of the packet is the own node, the packet is transmitted to the host (Step S94), and the node 10 transmits the ACK to the transmission source (Step S95).

On the other hand, if the destination of the packet is not the own node, the node 10 performs table retrieval for the destination using the routing table 142 (Step S83), and acquires the routing destination and the group ID. The node 10 then determines whether the GID is the same as the own GID (Step S84). If the GID is the same as the own GID, the node 10 routes the packet to the corresponding wireless module (Step S85).

If the routing destination is the upper unit for 60 G wireless 146a, the upper unit for 60 G wireless 146a transmits the packet using the 60 G wireless (Step S86). If the routing destination is the lower unit for 60 G wireless 146b, the lower unit for 60 G wireless 146b transmits the packet using the 60 G wireless (Step S87).

If the routing destination is the left unit for 60 G wireless 146c, the left unit for 60 G wireless 146c transmits the packet using the 60 G wireless (Step S88). If the routing destination is the right unit for 60 G wireless 146d, the right unit for 60 G wireless 146d transmits the packet using the 60 G wireless (Step S89).

On the other hand, if the GID is not the same as the own GID (No at Step S84), which is a case in which the packet is transmitted to an other group, the node 10 determines whether the WSTA of the own node is 1 (Step S90). If the WSTA of the own node is not 1, the node 10 routes the packet to the wireless module used in a case of transmitting the packet to the node 10 of which WSTA is 1 in the group (Step S91), and the process proceeds to any of Steps S86 to S89.

On the other hand, if the WSTA of the own node is 1, the node 10 routes the packet to the WLAN module (Step S92), and the WLAN unit 147 transmits the packet using the WLAN (Step S93).

In this way, to transmit the packet to the outside of the group, the node 10 transmits the packet to the other node 10 having the STA function in the group, and the node 10 having the STA function transmits the packet using the WLAN. Accordingly, the information processing system can reduce the congestion at the AP 3.

As described above, in the third embodiment, the nodes 10 close to each other are grouped, and the node 10 transmits the packet using the 60 G wireless within the same group and transmits the packet using the WLAN to an other group. Accordingly, the node 10 can properly use the 60 G wireless and the WLAN using the group ID, and the information processing system can connect a large number of nodes 10 with each other at high speed in a wireless manner. Herein, twelve nodes 10 close to each other are grouped. Alternatively, the information processing system can group an arbitrary number of nodes 10.

### [d] Fourth embodiment

In the first to the third embodiments, it is fixed that which of the 60 G wireless and the WLAN is to be used between the two nodes. However, the wireless module used between the two nodes may be preferably changed to perform communication with efficiency depending on a communication state. In the fourth embodiment, the following describes a case of changing the wireless module used between the two nodes depending on the communication state.

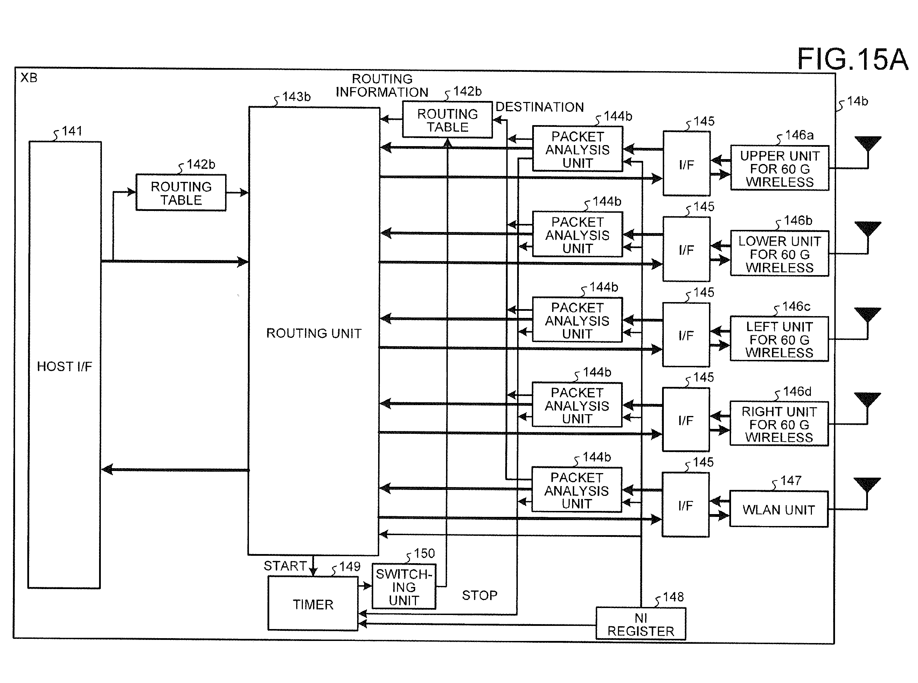

First, the following describes a configuration of an XB according to the fourth embodiment. FIG. 15A is a diagram illustrating the configuration of the XB according to the fourth embodiment. For convenience of explanation, functional parts same as those illustrated in FIG. 3A are denoted by the same reference numerals, and detailed description thereof will not be repeated here.

As illustrated in FIG. 15A, an XB 14b includes the host I/F 141, two routing tables 142b, a routing unit 143b, five packet analysis units 144b, and the five I/Fs 145. The XB 14b also includes the upper unit for 60 G wireless 146a, the lower unit for 60 G wireless 146b, the left unit for 60 G wireless 146c, the right unit for 60 G wireless 146d, the WLAN unit 147, the NI register 148, a timer 149, and a switching unit 150.

The routing table 142b is a retrieval table for retrieving the routing information that indicates the routing destination from the destination of the packet. Unlike the routing table 142, the routing table 142b includes two routing destinations.

The routing unit 143b receives the packet from the host I/F 141 or the packet analysis unit 144b, and passes the packet to the host I/F 141 or the I/F 145 based on the information of the NI register 148 and the routing information received from the routing table 142b. Unlike the routing unit 143, the routing unit 143b starts the timer 149 in routing to measure a packet transfer time.

The packet analysis unit 144b receives the packet from the I/F 145, analyzes the packet based on the information of the NI register 148, and extracts the destination. The packet analysis unit 144b passes the extracted destination to the routing table 142b and passes the packet to the routing unit 143b. The packet analysis unit 144b stops the timer 149 if the packet is ACK.

The timer 149 is a device for measuring the packet transfer time. The timer 149 is started by the routing unit 143b to transmit the packet, and stopped by the packet analysis unit 144b when the ACK is received.

The switching unit 150 compares a timer value with a threshold Tth with reference to the timer 149. If the timer value is larger than the threshold Tth, the switching unit 150 switches the routing destination to the other wireless module. In this way, the switching unit 150 switches the routing destination to the other wireless module based on the packet transfer time, so that a node 10f can properly use the wireless modules depending on the communication state. Herein, the "node 10f" represents a node according to the fourth embodiment.

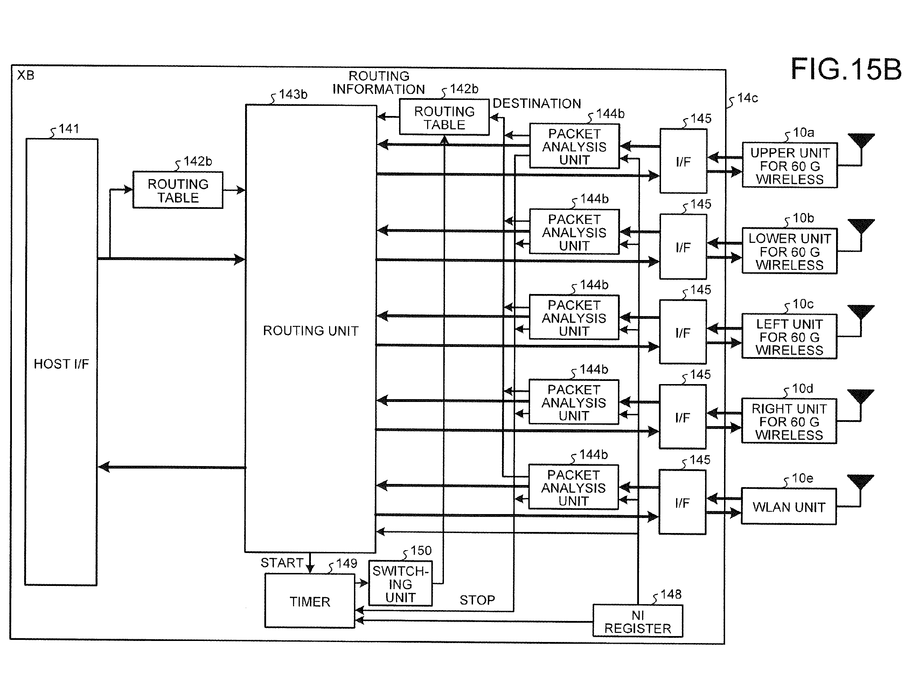

Although the XB 14b illustrated in FIG. 15A includes the 60 G wireless modules and the WLAN unit 147, the 60 G wireless modules and the WLAN unit 147 may be provided outside the XB. The FIG. 15B is a diagram illustrating another configuration of the XB of which the 60 G wireless modules and the WLAN unit 147 are provided outside.

As illustrated in FIG. 15B, an XB 14c does not include the upper unit for 60 G wireless 146a, the lower unit for 60 G wireless 146b, the left unit for 60 G wireless 146c, the right unit for 60 G wireless 146d, and the WLAN unit 147. The XB 14c performs wireless communication using the upper unit for 60 G wireless 10a, the lower unit for 60 G wireless 10b, the left unit for 60 G wireless 10c, the right unit for 60 G wireless 10d, and the WLAN unit 10e provided outside.

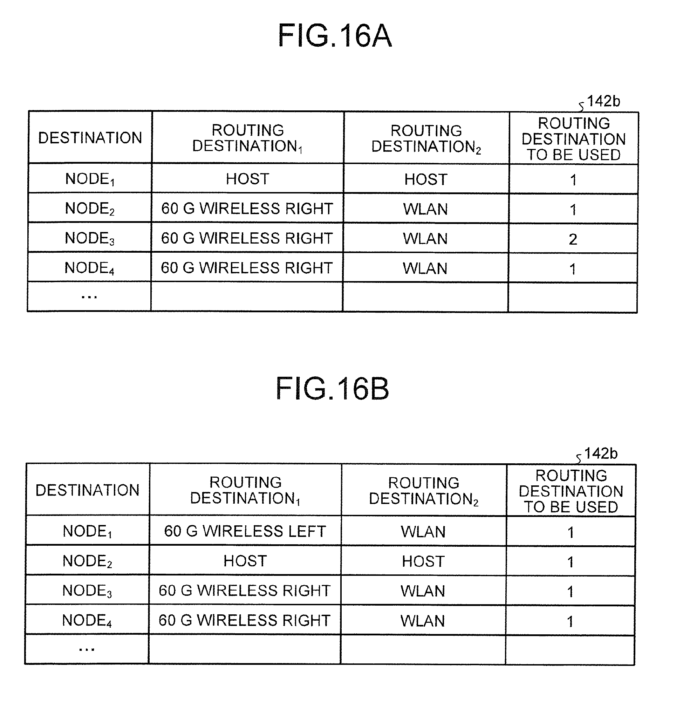

FIGS. 16A and 16B are diagrams illustrating an example of the routing table 142b according to the fourth embodiment. FIG. 16A illustrates the routing table 142b of the node₁ in a case of the node arrangement illustrated in FIG. 4, and FIG. 16B illustrates the routing table 142b of the node₂ in a case of the node arrangement illustrated in FIG. 4.

As illustrated in FIGS. 16A and 16B, the routing table 142b stores therein the destination, two routing destinations, and the routing destination to be used in association with each other. The routing destination to be used indicates that which of the routing destination₁ and the routing destination₂ is to be used, and a value thereof is 1 or 2.

For example, as illustrated in FIG. 16A, the routing destination₁ corresponding to the destination node₂ is the right unit for 60 G wireless 146d because the node₂ is arranged on the right of the node₁, and the routing destination₂ corresponding to the destination node₂ is the WLAN unit 147. The routing destination to be used is the routing destination₁. The routing destination₁ corresponding to the destination node₃ is the right unit for 60 G wireless 146d because the node₃ is arranged in the right direction of the node₁, and the routing destination₂ corresponding to the destination node₃ is the WLAN unit 147. The routing destination to be used is the routing destination₂.

As illustrated in FIG. 16B, the routing destination₁ and the routing destination₂ corresponding to the destination node₂ are the host, and the routing destination to be used is the routing destination₁. The routing destination₁ corresponding to the destination node₃ is the right unit for 60 G wireless 146d because the node₃ is arranged on the right of the node₂, and the routing destination₂ corresponding to the destination node₃ is the WLAN unit 147. The routing destination to be used is the routing destination₁.

In this way, two routing destinations are provided to the routing table 142b, so that the node 10f can transmit the packet with efficiency by properly using the two routing destinations.

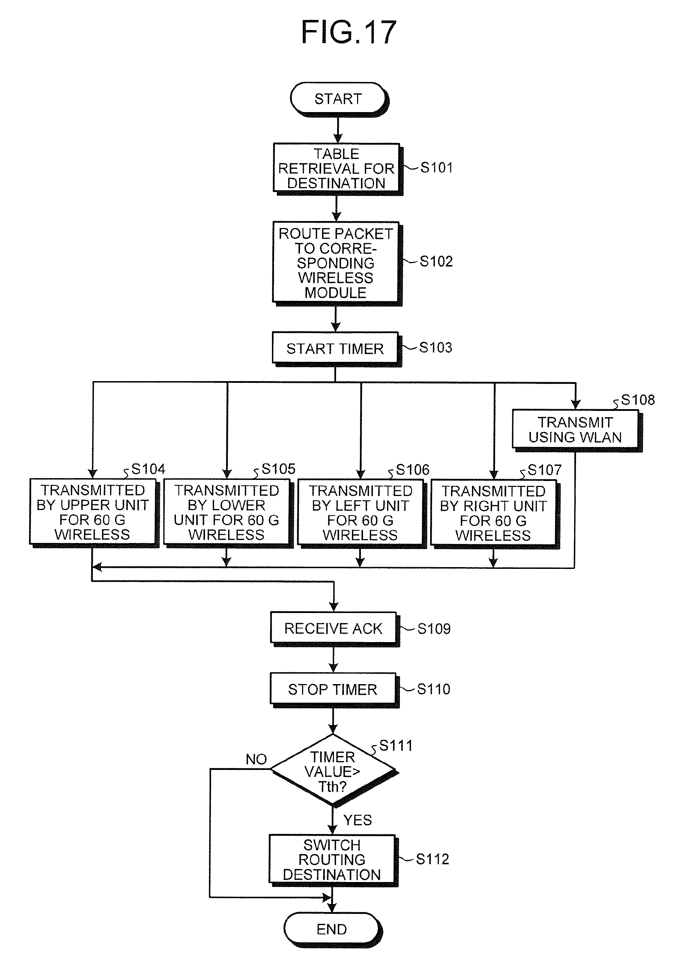

The following describes the procedure of transmission processing by the node 10f according to the fourth embodiment. FIG. 17 is a flowchart illustrating the procedure of the transmission processing by the node 10f according to the fourth embodiment. As illustrated in FIG. 17, the node 10f performs table retrieval for the destination using the routing table 142b (Step S101), and routes the packet to the corresponding wireless module (Step S102). At the same time, the node 10f starts the timer 149 (Step S103).

If the routing destination is the upper unit for 60 G wireless 146a, the upper unit for 60 G wireless 146a transmits the packet using the 60 G wireless (Step S104). If the routing destination is the lower unit for 60 G wireless 146b, the lower unit for 60 G wireless 146b transmits the packet using the 60 G wireless (Step S105).

If the routing destination is the left unit for 60 G wireless 146c, the left unit for 60 G wireless 146c transmits the packet using the 60 G wireless (Step S106). If the routing destination is the right unit for 60 G wireless 146d, the right unit for 60 G wireless 146d transmits the packet using the 60 G wireless (Step S107). If the routing destination is the WLAN unit 147, the WLAN unit 147 transmits the packet using the WLAN (Step S108).

When receiving the ACK from the node 10f as the transmission destination of the packet (Step S109), the node 10f stops the timer 149 (Step S110). The node 10f then determines whether the timer value is larger than the threshold Tth (Step S111). If the timer value is larger than the threshold Tth, the node 10f switches the routing destination of the routing table 142b (Step S112).

The procedure of the reception processing by the node 10f is the same as the procedure of the reception processing by the node 10 illustrated in FIG. 7.

As described above, in the fourth embodiment, the routing table 142b stores therein two routing destinations, and the node 10f switches the routing destination if the packet transfer time is larger than the predetermined threshold Tth. Accordingly, the node 10f can transmit the packet while avoiding a busy wireless module, so that transmission speed of the packet can be increased.

### [e] Fifth embodiment

In the second embodiment, described is a case in which the threshold Dth is a fixed value, the threshold Dth being for determining which of the 60 G wireless module and the WLAN wireless module is to be used. However, the threshold Dth may be changed depending on a communication state. In the fifth embodiment, the following describes a case in which the threshold Dth is changed depending on a communication state. The configurations of the rack 1, the node 10, and the routing table 142, and the procedure of the reception processing are the same as those in the second embodiment. The configuration of the XB is the same as that in the fourth embodiment. Herein, the following describes the procedure of the transmission processing by the node 10f. Note that the NI register 148 stores therein two thresholds Tth1 and Tth2 as thresholds of the timer value.

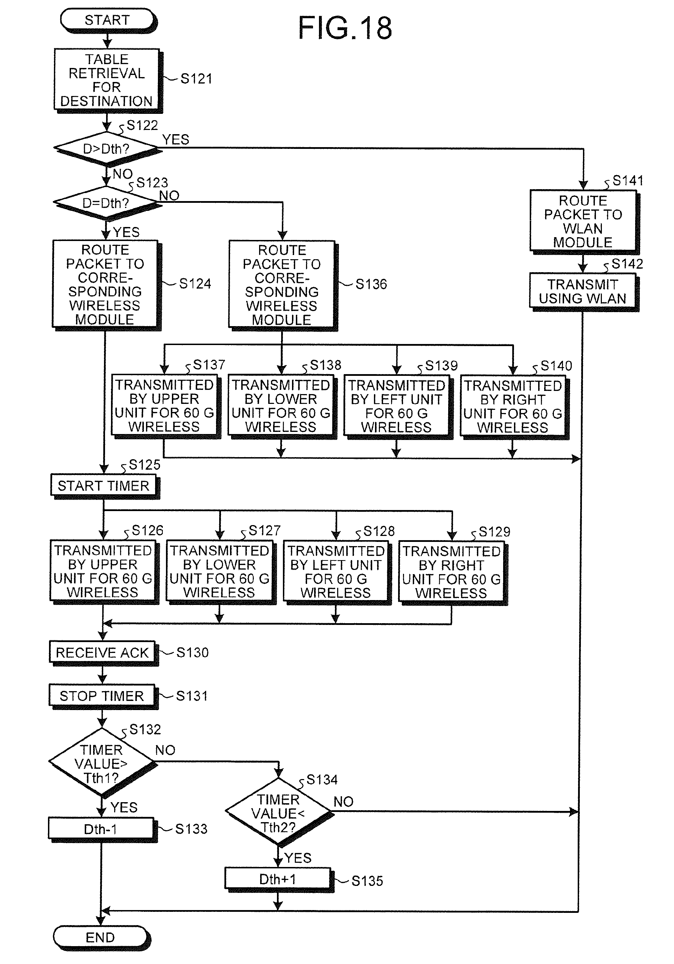

FIG. 18 is a flowchart illustrating the procedure of transmission processing by the node 10f according to the fifth embodiment. As illustrated in FIG. 18, the node 10f performs table retrieval for the destination using the routing table 142 (Step S121), and acquires the routing destination and the distance D. The node 10f then determines whether D is larger than Dth (Step S122). If D is not larger than Dth, the node 10f determines whether D is equal to Dth (Step S123). If D is equal to Dth, the node 10f routes the packet to the corresponding wireless module (Step S124), and starts the timer 149 (Step S125).

If the routing destination is the upper unit for 60 G wireless 146a, the upper unit for 60 G wireless 146a transmits the packet using the 60 G wireless (Step S126). If the routing destination is the lower unit for 60 G wireless 146b, the lower unit for 60 G wireless 146b transmits the packet using the 60 G wireless (Step S127).

If the routing destination is the left unit for 60 G wireless 146c, the left unit for 60 G wireless 146c transmits the packet using the 60 G wireless (Step S128). If the routing destination is the right unit for 60 G wireless 146d, the right unit for 60 G wireless 146d transmits the packet using the 60 G wireless (Step S129).

When receiving ACK from the node 10f as the transmission destination of the packet (Step S130), the node 10f stops the timer 149 (Step S131). The node 10f then determines whether the timer value is larger than the threshold Tth1 (Step S132). If the timer value is larger than the threshold Tth1, which is a case in which the 60 G wireless communication is busy, the node 10f decrements the threshold Dth by 1 (Step S133). On the other hand, if the timer value is not larger than the threshold Tth1, the node 10f determines whether the timer value is smaller than the threshold Tth2 (Step S134). If the timer value is smaller than the threshold Tth2, which is a case in which the 60 G wireless communication is not busy, the node 10f increments the threshold Dth by 1 (Step S135).

On the other hand, if D is not equal to Dth (No at Step S123), the node 10f routes the packet to the corresponding wireless module (Step S136).

If the routing destination is the upper unit for 60 G wireless 146a, the upper unit for 60 G wireless 146a transmits the packet using the 60 G wireless (Step S137). If the routing destination is the lower unit for 60 G wireless 146b, the lower unit for 60 G wireless 146b transmits the packet using the 60 G wireless (Step S138).

If the routing destination is the left unit for 60 G wireless 146c, the left unit for 60 G wireless 146c transmits the packet using the 60 G wireless (Step S139). If the routing destination is the right unit for 60 G wireless 146d, the right unit for 60 G wireless 146d transmits the packet using the 60 G wireless (Step S140). The node 10f then ends the transmission processing.

On the other hand, if the D is larger than Dth, the node 10f routes the packet to the WLAN module (Step S141), and the WLAN unit 147 transmits the packet using the WLAN (Step S142).

As described above, in the fifth embodiment, the node 10f changes the threshold Dth based on the packet transfer time. Accordingly, the node 10f can properly use the 60 G wireless and the WLAN depending on a change in the communication state.

### [f] Sixth embodiment

In the first to the fifth embodiments, described is a case of using four 60 G wireless modules. Alternatively, only one 60 G wireless module may be used to communicate with the upper, lower, left, and right nodes. The following describes a case of communicating with the upper, lower, left, and right nodes by using only one 60 G wireless module.

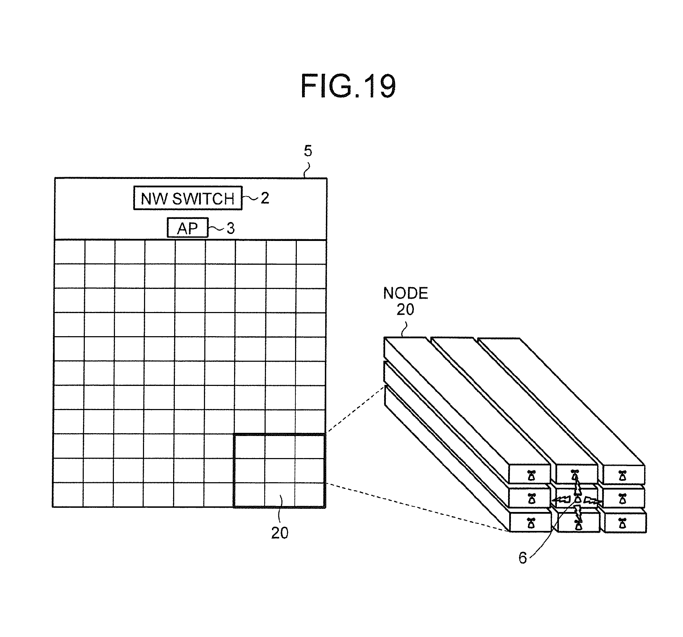

FIG. 19 is a diagram illustrating the configuration of the information processing system according to a sixth embodiment. For convenience of explanation, functional parts same as those illustrated in FIG. 1 are denoted by the same reference numerals, and detailed description thereof will not be repeated here. As illustrated in FIG. 19, the information processing system is a highly integrated server including the NW switch 2, the AP 3, and ninety-nine nodes 20 mounted in a rack 5. Unlike the node 10, the node 20 includes a 60 G wireless module 6 outside the housing.

The 60 G wireless module 6 transmits radio waves to any one of the upper, lower, left, and right nodes 20 by using beam-forming. Herein, the beam-forming means that radio waves are narrowly emitted only in a specified direction.

In this way, the information processing system according to the sixth embodiment can reduce the number of 60 G wireless modules by including the 60 G wireless module 6 outside the housing and using the beam-forming.

In the first to the sixth embodiments, described is the case in which the XB is implemented in hardware. Alternatively, by implementing a routing function of the XB with software, a communication program having the same function can be obtained. The following describes a hardware configuration of the XB that executes the communication program.

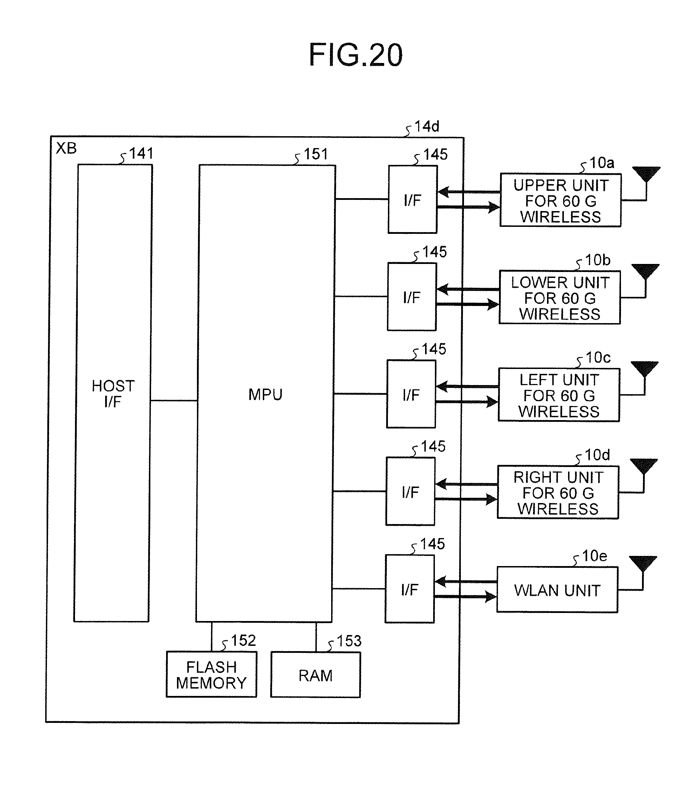

FIG. 20 is a diagram illustrating the hardware configuration of the XB that executes the communication program. As illustrated in FIG. 20, an XB 14d includes the host I/F 141, the five I/Fs 145, a micro processing unit (MPU) 151, a flash memory 152, and a random access memory (RAM) 153.

The host I/F 141 is an interface with the CPU 11 of its own node. The host I/F 141 passes the packet received from the CPU 11 to the MPU 151, and passes the packet received from the MPU 151 to the CPU 11 of the own node. The I/F 145 converts a signal received from the 60 G wireless module or the WLAN module into a packet, and passes the packet to the MPU 151. The I/F 145 also converts the packet received from the MPU 151 into a signal and passes the signal to the 60 G wireless module or the WLAN module connected thereto.

The MPU 151 is a processing unit that reads and executes the communication program from the flash memory 152. The flash memory 152 is a nonvolatile memory that stores therein the communication program. The flash memory 152 also stores therein information in the routing table 142 and information in the NI register 148. The RAM 153 is a memory that stores therein a table or a result in the midway obtained in the execution of the computer program. The information in the routing table 142 and the information in the NI register 148 are read out from the flash memory 152 to be written to the RAM 153 when the communication program is executed.

In the first to sixth embodiments, described is a case of using the WLAN and the 60 G wireless that uses the frequency of 60 GHz band. However, the present invention is not limited to the 60 G wireless and the WLAN, and may also be applied to a case of appropriately combining two types of wireless module or wired communication of which the communication speed and range where radio waves reach are different.

According to an aspect of an embodiment, a large number of information processing devices can be connected with each other at high speed in a wireless manner.

## Claims

1. An information processing device (10) comprising:
a first communication unit (146a-146d, 10a-10d, 6) that communicates with another information processing device (10) using a first communication scheme;
a second communication unit (147, 10e) that communicates with another information processing device (10) using a second communication scheme; and
a control unit (143, 143b) that determines a communication scheme for transmitting data to a destination based on information about a distance to an information processing device (10) as the destination of the data, causes the first communication unit (146a-146d, 10a-10d, 6) to transmit the data when the determined communication scheme is the first communication scheme, and causes the second communication unit (147, 10e) to transmit the data when the determined communication scheme is the second communication scheme.

2. The information processing device (10) according to claim 1, further comprising:
a communication scheme storage unit (142, 142b) that stores the destination and the communication scheme in association with each other based on the information about the distance to the information processing device (10) as the destination of the data, wherein
the control unit (143, 143b) determines the communication scheme for transmitting the data based on the communication scheme storage unit (142, 142b).

3. The information processing device (10) according to claim 1, further comprising:
a distance storage unit (142, 142b) that stores the information about the distance to the information processing device (10) as the destination of the data in association with the destination, wherein
the control unit (143, 143b) determines the communication scheme for transmitting the data based on the distance storage unit (142, 142b).

4. The information processing device (10) according to any one of claims 1 to 3, wherein the control unit (143b) performs control to transmit the data using a different communication scheme when a time required for transmitting the data exceeds a predetermined threshold.

5. The information processing device (10) according to claim 3, wherein the control unit (143b) compares the information about the distance stored in the distance storage unit (142b) with a predetermined threshold to determine the communication scheme for transmitting the data, and increments or decrements the threshold based on a time required for transmitting the data.

6. The information processing device (10) according to claim 1, wherein the first communication unit (146a-146d, 10a-10d) communicates with another information processing device (10) in a wireless manner, and comprises four wireless communication units (146a, 146b, 146c, 146d, 10a, 10b, 10c, 10d) that communicate with respective upper, lower, left, and right information processing devices (10).

7. The information processing device (10) according to claim 1, wherein the first communication unit (6) communicates with another information processing device (10) in a wireless manner, and communicates with upper, lower, left, and right information processing devices (10) using beam-forming.

8. An information processing system (1) comprising:
a plurality of information processing devices (10), wherein
each of the information processing devices (10) comprises a first communication unit (146a-146d, 10a-10d, 6) that communicates with another information processing device (10) using a first communication scheme,
at least one of the information processing devices (10) further comprises a second communication unit (147, 10e) that communicates with another information processing device (10) using a second communication scheme, and
each of the information processing devices (10) comprises a control unit (143, 143b) that determines a communication scheme for transmitting data to a destination based on information about a distance to an information processing device (10) as the destination of the data, causes the first communication unit (146a-146d, 10a-10d, 6) to transmit the data when the determined communication scheme is the first communication scheme, and causes the second communication unit (147, 10e) to transmit the data when the determined communication scheme is the second communication scheme.

9. The information processing system (1) according to claim 8, wherein
the information processing devices (10) are grouped and only one of the information processing devices (10) in the group comprises the second communication unit (147, 10e),
each of the information processing devices (10) further comprises a group storage unit (142) that stores the destination and an identifier that identifies a group of the destination in association with each other, and
the control unit (143, 143b) determines the communication scheme for transmitting the data based on the group storage unit (142), and transfers the data using the first communication unit (146a-146d, 10a-10d, 6) to the information processing device (10) comprising the second communication unit (147, 10e) when the data is transmitted using the second communication scheme.

10. A communication method performed by an information processing device, the communication method comprising:
determining a communication scheme for transmitting data to a destination based on information about a distance to an information processing device as the destination of the data; and
transmitting the data using the determined communication scheme.

11. A computer-readable storage medium storing a communication program causing a computer embedded in an information processing device to execute a process comprising:
determining a communication scheme for transmitting data to a destination based on information about a distance to an information processing device as the destination of the data; and
transmitting the data using the determined communication scheme.
